# EUROPÄISCHE PATENTSCHRIFT

(11) **EP 1 626 323 B1**
(45) Veröffentlichungstag und Bekanntmachung des Hinweises auf die Patenterteilung: **20.01.2010**
(21) Anmeldenummer: 05014926.9
(22) Anmeldetag: 09.07.2005
(51) Int. Cl.: G06F 21/00

(54) **Zugriffskontrolle und Kopierschutz**
access control and copy protection
contrôle d'accès et protection contre la copie

(30) Priorität: 11.08.2004 DE 102004039104
(43) Veröffentlichungstag der Anmeldung: 15.02.2006
(73) Patentinhaber: Hopp, Andreas, 45472 Mülheim a.d.R. (DE); Ostrowski, Gerhard, 45468 Mülheim a.d.R. (DE); Wieskus, Axel, 45472 Mülheim a.d.R (DE)
(72) Erfinder: Hopp Andreas, 45472 Mülheim a.d.R. (DE); Ostrowski Gerhard, 45468 Mülheim a.d.R (DE)
(74) Vertreter: Cohausz & Florack

(56) Entgegenhaltungen:
- DE-A1- 10 057 536
- GB-A- 2 149 944
- US-A- 5 826 011
- US-A- 5 940 504
- US-A1- 2002 129 265
- US-A1- 2002 174 356
- BUCHHEIT M: "SOFTWARE-KOPIERSCHUTZ" ELEKTRONIK, WEKA FACHZEITSCHRIFTENVERLAG, POING, DE, Bd. 41, Nr. 14, 7. Juli 1992 (1992-07-07), Seiten 68-74, XP000307635 ISSN: 0013-5658

## Beschreibung

Die Erfindung betrifft im allgemeinen ein Verfahren zur Kontrolle einer Zugriffsberechtigung auf Softwareprodukte.

Bei herkömmlichen Softwareprodukte, insbesondere bei fest auf einem Computer installierbaren Programmen, ist das Problem des Kopierens der Programme bis heute nicht vollständig gelöst. Es ist beispielsweise bekannt, die Installation von Software mit Hilfe von Installationsschlüsseln zu schützen. Diese Installationsschlüssel werden als Ziffernfolge dem Produkt beigelegt und müssen vom Nutzer bei der Erst händisch eingegeben werden. Diese Ziffernfolge ist aber ohne weiteres zu kopieren und kann zum Vervielfältigen der Software führen.

Auch ist bekannt, sogenannte "Dongel"-Technik zu verwenden. Hierbei wird an der parallelen Schnittstelle eines Computers ein Aufsatz angesteckt, auf dem eine Zeichenkette kodiert abgelegt ist. Die Software lässt sich nur ausführen, wenn der Dongel installiert ist. Dies wird durch die Software bei jedem Start überprüft. Dadurch, dass nur eine Zugriffskennung auf dem Dongel abgelegt ist, dieser sich im Zweifel ebenfalls leicht kopieren.

Es ist daher eine Aufgabe der Erfindung, eine Zugriffsberechtigung und einen Kopierschutz für Softwareprodukte zur Verfügung zu stellen, der sicher ist und durch den Nutzer einfach handhabbar ist.

Die zuvor aufgezeigte Aufgabe wird durch den Gegenstand des Anspruchs 1 gelöst.

Softwareprodukte im Sinne der Erfindung können Onlineangebote, die beispielsweise über das Internet abgerufen werden können,sein. Die in der nachfolgenden allgemeinen und speziellen Beschreibung auf ein auf einem Computer fest installierbares Programm als Softwareprodukt gerichteten Ausführungsbeipiele dienen lediglich zur Erläuterung und sind nicht Teile der Erfindung.

Zugriffskennungen sind Zeichenketten, die verschlüsselt und unverschlüsselt sein können. Die Zugriffskennungen können durch Prüfisummenziffern geschützt sein.

Die Speichermedien sind austauschbar und können im Bedarfsfall leicht mit dem benutzten Computer verbunden werden. Der Zugriff auf die Speichermedien kann über verschiedene Schnittstellen, beispielsweise USB, Smart-Card Lesegerät, Firewire, Bluetooth, PS/2 oder andere erfolgen.

Dadurch, dass die erste und die zweite Zugriffskennung von dem Speichermedium ausgelesen werden können und mit Hilfe dieser beiden Zugriffskennungen eine Zugriffsberechtigung überprüft wird, kann eine erhöhte Sicherheit gegenüber Kopien und unberechtigten Zugriffen auf Onlineinhalte gewährleistet werde. Des weiteren ist eine erste Zugriffskennung eindeutig dem Softwareprodukt zugeordnet. Durch diese eindeutige Zuordnung zu dem Softwareprodukt kann das Speichermedium einem ganz bestimmten Sofwareprodukt zugeordnet werden. Das Speichermedium wäre in einem solchen Fall mit einem gleichen Softwareprodukt aber mit einer anderen Seriennummer unbrauchbar, und dieses Softwareprodukt wäre mit diesem Speichermedium nicht installierbar. Auch wäre es möglich, dass ein Softwareprodukt ohne eine entsprechende Zugriffskennung auf einem Speichermedium nur als Testinstallation installierbar ist.

Es wird vorgeschlagen, dass die zwei Zugriffskennungen auf einem USB-Speicherstick oder einer Smart-Card gespeichert werden. Diese beiden Medien sind besonders bevorzugt, da diese für den Benutzer in äußerst einfacher Art und Weise handhabbar sind. Auch sind sie kostengünstig in der Herstellung, wodurch sich für die Anbieter der Softwareprodukte durch den vorgeschlagenen Kopierschutz keine erheblichen Mehrkosten ergeben.

Um die Zugriffskontrolle auf die Softwareprodukte weiter zu verbessern, wird vorgeschlagen, dass die zugriffskennungen in einer zentralen Datenbank einander zugeordnet gespeichert werden. In dieser zentralen Datenbank kann in einer Tabelle die Zuordnung der jeweiligen Zugriffskennungen gespeichert werden. Die dadurch entstehenden Tuppel sind eindeutig und ermöglichen eine Kotrolle, ob die zumindest zwei Zugriffskennungen zueinander gehören und somit eine Freigabe des Softwareprodukts ermöglichen.

Gemäss einer ersten Alternative ist das Softwareprodukt ein auf einem Computer installierbares Programm. Dies kann jede beliebige Anwendersoftware sein.

In diesem Falle ist es bevorzugt, dass zumindest eine zweite Zugriffskennung eine eindeutig einem Benutzer zugeordnete Benutzerkennung ist. Diese eindeutig dem Benutzer zugeordnete Benutzerkennung kann auf dem Speichermedium beispielsweise beim Kauf des Softwareprodukts gespeichert werden. Die eindeutige Benutzerkennung ermöglicht die eindeutige Zuordnung zu dem jeweiligen Nutzer. Das Speichermedium wird somit in der Weise konfektioniert, dass es sowohl die eindeutige Produktkennung als auch die eindeutige Benutzerkennung aufweist. Dieses Tuppel ist einmalig und nur mit dem jeweiligen Softwareprodukt nutzbar.

Um eine weiter Verbesserung zu gewährleisten, insbesondere um das Kopieren der ersten und zweiten Zugriffskennungen auf ein weiteres Speichermedium zu verhindern, wird auch vorgeschlagen, dass eine dritte Zugriffskennung eine eindeutig dem Speichermedium zugeordnete Hardwarekennung ist. In dem Speichermedium selbst sind vorzugsweise Mikrochips verbaut, aus denen eindeutige Ziffernfolgen ausgelesen werden können. Diese sind vorzugsweise nur einmalig und fest mit dem Speichermedium verdrahtet. Somit können drei unterschiedliche Zugriffskennungen miteinander verheiratet" werden. Das Tuppel bestehend aus den drei Zugriffskennungen ist eindeutig und kann nicht kopiert werden.

Gemäß eines vorteilhaften Ausführungsbeispiels wird vorgeschlagen, dass bei einer Installation des Programms auf dem Computer die Zugriffskennungen aus dem Speichermedium ausgelesen werden und dass mit Hilfe einer Installationsroutine des Programms anhand der Zugriffskennungen die Zugriffsberechtigung geprüft wird. Hierbei wird bei der Installation des Programms, beispielsweise beim Aufruf einer Installationsroutine, die Zugriffsberechtigung auf das Programm geprüft. Hierzu werden aus dem Speichermedium die Zugriffskennungen ausgelesen und in der Installationsroutine geprüft. Dies kann beispielsweise dadurch geschehen, dass in den Zugriffskennungen Prüfziffern kodiert sind, die mit Hilfe geeigneter Programme in der Installationsroutine überprüft werden. Nur wenn die Prüfziffern korrekt sind und/oder weitere mögliche Prüfverfahren durchgeführt worden sind, lässt sich das Programm installieren. In einem anderen Falle ist es möglich, dass lediglich eine Testversion installiert wird, die nur einen beschränkten Betrieb sowohl zeitlich als auch eventuell den Funktionsumfang betreffend ermöglicht.

Um unabhängig von dem Speichermedium zu werden, wird gemäß vorteilhafter Ausgestaltungen vorgeschlagen, dass zumindest die ausgelesenen Benutzerkennung im Computer gespeichert wird. Hierzu kann beispielsweise in einem "Registry"-Eintrag die entsprechende Information abgelegt werden. Bei einer Aktivierung des Programms kann zusätzlich die Hardwarekennung vom Speichermedium gelesen werden. In diesem Fall ist das Vorhandensein des Speichermediums für eine erfolgreiche Aktivierung notwendig. Die Speicherung im Computer ist jedoch nicht notwendig, da die Zugriffskennungen vom Speichermedium auslesbar sind.

Zur endgültigen Freischaltung des Programms oder zur Aktivierung weitere Funktionen sowie zur Registrierung der Nutzer wird vorgeschlagen, dass nach einer Installation des Programms eine Überprüfung der Zugangskennung über ein Datennetz durchgeführt wird. Hierzu werden, gemäß vorteilhafter Ausgestaltungen, die Zugriffskennungen über das Datennetz an einen zentralen Rechner übermittelt, die an den zentralen Rechner übermittelten Zugriffskennungen mit in der zentralen Datenbank gespeicherten Zugriffskennungen verglichen und eine Freigabe über das Datennetz an den Computer nur bei einer positiven Prüfung übermittelt. Insbesondere eine Prüfung der Zuordnung der Zugriffskennungen in der Datenbank selbst mit den empfangenen Zugriffskennungen wird hiermit ermöglicht. Da in der Datenbank eine eindeutige Zuordnung der zumindest zwei Zugriffskennungen vorliegt kann unmittelbar geprüft werden, ob die empfangene Kombination der Zugriffskennungen einem solchen gespeicherten Tuppel entspricht. Nur in diesem Falle ist eine Freigabe des Programms möglich.

Auch ist es mit dem erfindungsgemäßen Verfahren möglich, geschützte Programme zu verkaufen oder anderweitig den Eigentümer wechseln. Die Benutzung des Programms kann dann dadurch gewährleistet werden, dass die zweite zugriffskennung durch einen Anbieter derart geändert wird, dass bei einem Verkauf des Programms eine neue Benutzerkennung vergeben wird, dass die neue Benutzerkennung zusammen mit der Produktkennung auf einem Speichermedium gespeichert wird und dass die neue Benutzerkennung zu der Produktkennung in der zentralen Datenbank zugeordnet wird. Ein neuer Benutzer kann von dem Anbieter des Programms ein neues Speichermedium anfordern. Auf diesem neuen Speichermedium wird die eindeutige Benutzerkennung und die Produktkennung kodiert. Der Anbieter kann hierdurch beispielsweise überprüfen, ob das Programm rechtmäßig verkauft worden ist. Auch kann die Zuordnung der vorherigen Benutzerkennung zu der Produktkennung in der Datenbank gelöscht werden. Der bisherige Benutzer kann sein Speichermedium nicht mehr nutzen, um das Programm korrekt zu installieren. Durch die Speicherung der Benutzerkennung zusammen mit der Produktkennung in der zentralen Datenbank kann das Programm in der Folge nur noch durch den neuen Benutzer durch Bekanntgabe der Benutzerkennung und der Produktkennung an die zentrale Datenbank aktiviert werden.

Gemäß einer weiteren Alternative ist das Softwareprodukt ist ein über ein zentrales Datennetz abrufbares Online-Angebot. Diese Online-Angebot kann beispielsweise ein Email-Dienst, ein Forum, ein Online-Shop, oder eine sonstige Onlin-Dienstleistung sein.

Es wird bevorzugt, dass bei einem Zugriff auf das Online-Angebot eine Abfrage der auf dem Speichermedium gespeicherten Zugriffskennungen durchgeführt wird, dass die abgefragten Zugriffskennungen über das zentrale Datennetz an einen das Online-Angebot betreibenden Rechner, oder Rechnerverbund übermittelt wird, dass in dem Rechnerverbund die Zugehörigkeit der Zugriffskennungen zueinander überprüft wird und dass eine Freigabe bei positiven Prüfung erfolgt. Der Benutzer muss hierfür lediglich das Speichermedium bereithalten. Die weiteren Daten sind auf dem Speichermedium gespeichert. Dies erleichtert den Zugriff, da der Benutzer keine weiteren Passwörter behalten muss.

Ein Schutz vor unberechtigtem Zugriff kann dadurch gewährleistet werden, dass nach einem erfolgreichen Zugriff auf das Online-Angebot mit Hilfe des Rechners zumindest die erste Zugriffskennung verändert wird und dass die Zuordnung zwischen zumindest der ersten und der zweiten Zugriffskennung in der zentralen Datenbank entsprechend geändert wird. Hierbei kann durch den Rechner oder den Rechnerverbund eine neue erste Zugriffskennung erstellt werden und über das zentrale Datennetz an den Computer, an dem das Speichermedium betrieben wird, übertragen werden. In dem Speichermedium wird dann die veraltete erste Zugriffskennung durch die neue Zugriffskennung ausgetauscht. Das gleiche geschieht in der zentralen Datenbank, in der die Zuordnung der ersten und zweiten Zugriffskennung entsprechend geändert wird. Hiernach kann der Zugriff auf das Online-Angebot nur noch gewährt werden, wenn die neue erste Zugriffskennung mit der bisherigen zweiten Zugriffskennung verwendet wird. Bei Verwendung einer veralteten ersten Zugriffskennung kann der Zugriff verweigert werden. Um eine weitere Sicherheit zu gewährleisten, wird vorgeschlagen, dass die Abfrage der Zugriffskennungen vom Speichermedium passwortgeschützt ist. Hierdurch kann beim Zugriff auf das Online-Angebot mit Hilfe der Zugriffskennungen zunächst ein Benutzerpasswort abgefragt werden, so dass die Zugriffskennungen vom dem Speichermedium nur dann ausgelesen werden, wenn das Passwort korrekt ist.

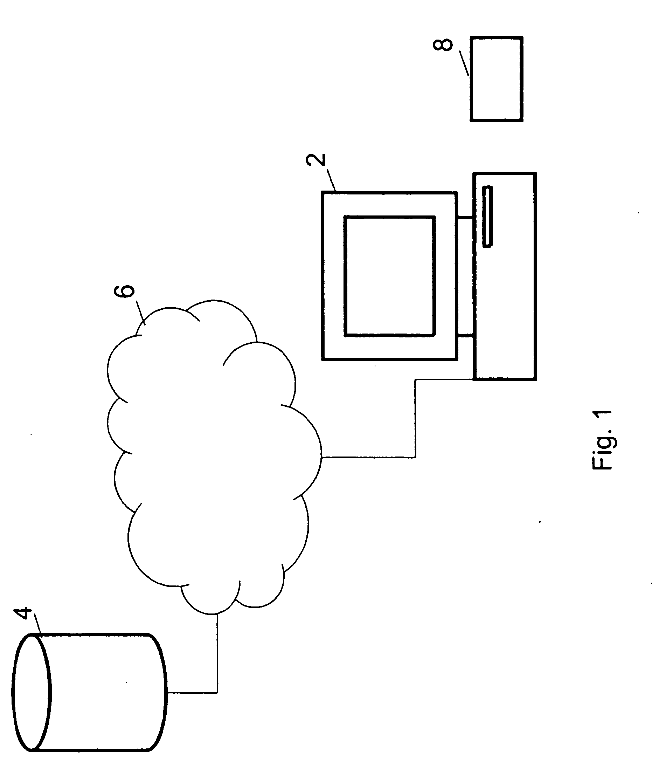

Die Erfindung wird nachfolgend anhand einer ein Ausführungsbeispiel zeigenden Zeichnung näher erläutert. In der Zeichnung zeigt die einzige Figur ein für die Zugriffskontrolle eingerichtetes System aus zentraler Datenbank und Computer.

Gezeigt ist ein Computer 2 der mit einer zentralen Datenbank 4 über das Internet 6 verbunden ist. Ferner gezeigt ist ein USB-Stick 8.

Auf dem USB-Stick 8 wird gemäß einer ersten Alternative beim Kauf eines Programms eine eindeutige Produktkennung, die genau diesem Programm zugeordnet ist, gespeichert. Ferner wird auf dem USB-Stick 8 eine zweite Zugriffskennung als Benutzerkennung gespeichert. Diese Benutzerkennung ist eindeutig dem Benutzer zugeordnet. Beim Kauf des Produktes werden diese beiden Kennungen ebenfalls über das Internet 6 von einem Verkäufer (nicht dargestellt) an die zentrale Datenbank 4 übermittelt. In der zentralen Datenbank 4 wird dann das Tuppel bestehend aus Benutzerkennung und Produktkennung einander zugeordnet gespeichert.

Der Benutzer kann auf dem Computer 2 das soeben gekaufte Programm installieren. Während der Installationsroutine wird der Benutzer aufgefordert, den USB-Stick 8 an den Computer 2 anzuschließen. Die Installationsroutine liest aus dem USB-Stick 8 die Benutzerkennung und die Produktkennung aus und überprüft diese anhand geeigneter Methoden. Dies kann beispielsweise durch Prüfziffern erfolgen. Stimmen die Produktkennung und die Benutzerkennung mit den geforderten Werten überein, so gibt die Installationsroutine den Installationsprozess frei und das Programm kann installiert werden. Für die Erstellung der Benutzerkennung ist es möglich, dass diese in Abhängigkeit der Produktkennung erstellt wird. Beispielsweise können Algorithmen die Produktkennung benutzen, um eine eindeutige Benutzerkennung zu erzeugen. Hierdurch kann während der Installation überprüft werden, ob die auf dem USB-Stick 8 gespeicherte Benutzerkennung tatsächlich für das entsprechende Produkt erzeugt worden ist oder nicht.

Für die Registrierung des Produktes kann durch den Computer 2 über das Internet 6 eine Verbindung mit der Datenbank 4 aufgenommen werden. Über diese Verbindung wird zumindest Benutzerkennung und Produktkennung an die zentrale Datenbank 4 übermittelt. In der zentralen Datenbank 4 wird überprüft, ob diese beiden Werte einander zugeordnet gespeichert sind. Ist dies der Fall, so kann durch die zentrale Datenbank 4 die Registrierung des Produkts erfolgen. Ferner kann eine weitere Freigabe des auf dem Computer 2 installierten Produkts erfolgen.

Gemäß einer weiteren Alternative kann auf dem USB-Stick 8 eine Produktkennung und eine Hardwarekennung gespeichert sein.

Möchte der Benutzer beispielsweise über den Computer 2 ein Online-Angebot über das Internet 6 von einem mit der zentralen Datenbank 4 verbundenen Rechner abrufen, so werden beim Aufrufen der entsprechenden Internetseite die Zugriffskennungen aus dem USB-Stick 8 ausgelesen. Dies kann auch passwortgeschützt erfolgen, so dass nur durch eine Benutzereingabe eines Passworts die entsprechenden Daten aus dem USB-Stick ausgelesen werden können.

Die ausgelesenen Kennungen werden über das Internet 6 an die zentrale Datenbank 4 übermittelt. Dort wird überprüft, ob die ausgelesenen Zugriffskennungen einander zugeordnet sind. Ist dies der Fall, so wird wiederum über das Internet 6 der Zugriff auf die aufgerufene Internetseite freigegeben.

Es ist auch möglich, dass nach einem einmaligen erfolgreichen Aufrufen des entsprechenden Online-Angebots die erste Zugriffskennung auf dem USB-Stick 8 geändert wird. Dies kann derart erfolgen, dass bei einer erfolgreichen Überprüfung des Tuppels der Zugriffskennungen in der Datenbank 4 eine neue erste Zugriffskennung errechnet wird. Diese neue erste zugriffskennung wird in der Datenbank 4 zusammen mit der bisherigen zweiten Zugriffskennung einander zugeordnet gespeichert. Die Zuordnung der vorherigen ersten Zugriffskennung zu der zweiten Zugriffskennung wird aufgelöst.

Danach wird von der Datenbank 4 über das Internet 6 die neue erste Zugriffskennung an den Computer 2 übermittelt. Nach Empfang der neuen ersten Zugriffskennung wird diese in dem USB-Stick 8 abgespeichert. In dem USB-Stick 8 sind nun die neue erste Zugriffskennung und die zweite zugriffskennung gespeichert. Bei einem neuen Aufruf des Online-Angebots wird nun die neue erste Zugriffskennung und die zweite Zugriffskennung an die Datenbank 4 übermittelt und führt dort zu einem erfolgreichen Vergleich.

Für den Fall, dass bei dem ersten Aufruf der Datenverkehr zwischen Computer 2 und Datenbank 4 im Internet 6 abgeführt worden ist, und beispielsweise die erste Zugriffskennung und die zweite Zugriffskennung abgehört wurde, kann durch diesen Mechanismus ein erneuter Zugriff mit der alten Zugriffskennung verhindert werden. Hierdurch besteht für den Benutzer des Online-Angebots eine erhöhte Sicherheit.

## Patentansprüche

1. Verfahren zur Kontrolle einer Zugriffsberechtigung auf Softwareprodjukte,
- bei dem das Softwareprodukt ein über ein zentrales Datennetz abrufbares Online-Angebot ist,
- bei dem zumindest zwei Zugriffskennungen durch einen Anbieter der Softwareprodukte auf einemaustauschbaren Speichermedium gespeichert werden,
- bei dem zumindest eine erste Zugriffskennung eine eindeutig dem Softwareprodukt zugeordnete Produktkennung ist,
- bei dem die Zugriffskennungen in einer zentralen Datenbank einander zugeordnet gespeichert werden,
- bei dem die zweite Zugriffskennung durch einen Anbieter geändert werden kann derart,
- dass bei einem Verkauf des Softwareprodukts eine neue zweite Zugriffskennung vergeben wird,
- dass die neue zweite Zugriffskennung zusammen mit der Produktkennung auf einem austauschbaren Speichermedium gespeichert wird,
- dass die neue zweite Zugriffskennung zu der Produktkennung in der zentralen Datenbank zugeordnet wird,
- bei dem zumindest die beiden Zugriffskennungen bei einem Zugriff auf das Softwareprodukt aus dem austauschbaren Speichermedium gelesen werden,
- bei dem anhand der beiden aus dem austauschbaren Speichermedium ausgelesenen Zugriffskennungen eine Zugriffsberebhtigung überprüft wird derart, dass die abgefragten Zugriffskennungen über as zentrale Datennetz an einen das Online-Angebot betreibenden Rechner oder Rechnerverbund übermittelt werden,
- dass in dem Rechner oder Rechnerverbund die Zugehörigkeit der Zugriffskennungen zueinander überprüft wird,
- dass eine Freigabe bei einer positiven Prüfung erfolgt,
- dass nach einem erfolgreichen Zugriff auf das Online-Angebot mit Hilfe des Rechners zumindest die erste Zugriffskennung verändert wird, und
- dass die Zuordnung zwischen zumindest der ersten und zweiten Zugriffskennung in der zentralen Datenbank entsprechend geändert wird.

2. Verfahren nach Anspruch 1, **dadurch gekennzeichnet, dass** die zumindest zwei Zugriff auf einem USB-Speicher oder einer Smart-Card gespeichert werden.

3. Verfahren nach Anspruch 1, **dadurch gekennzeichnet, dass** zumindest eine Zweite Zugriffskennung eine eindeutig dem Speichermedium zugeordnete Hardwarekennung ist.

4. Verfahren nach Anspruch 3, **dadurch gekennzeichnet, dass** die Abfrage der Zugriffskennungen vom Speichermedium Passwort geschützt ist.

## Claims

1. Method for checking an access authorisation for software products,
- in which the software product is an online offer which is available via a central data network,
- in which at least two access identifiers are stored by a provider of the software products on an exchangeable storage medium,
- in which at least one first access identifier is a product identifier uniquely assigned to the software product,
- in which the access identifiers are stored in a central database and associated with each other,
- in which the second access identifier can be changed by a provider such
- that when the software product is sold a new second access identifier is assigned,
- that the new second access identifier is stored together with the product identifier on an exchangeable storage medium,
- that the new second access identifier is assigned to the product identifier in the central database,
- in which at least the two access identifiers are read from the exchangeable storage medium when the software product is accessed,
- in which, by means of the two access identifiers read from the exchangeable storage medium, an access authorisation is checked such that the access identifiers retrieved are transmitted via the central data network to a computer or computer network operating the online offer,
- that the computer or computer network checks that the access identifiers belong together,
- that clearance is given when the check is positive,
- that at least the first access identifier is altered by means of the computer after the online offer has been successfully accessed and
- that the correlation between at least the first and second access identifiers is correspondingly changed in the central database.

2. Method according to Claim 1, **characterised in that** the at least two access identifiers are stored on a USB memory or a Smart Card.

3. Method according to Claim 1, **characterised in that** at least one second access identifier is a hardware identifier uniquely assigned to the storage medium.

4. Method according to Claim 3, **characterised in that** the retrieval of the access identifiers from the storage medium is password protected.

## Revendications

1. Procédé pour le contrôle d'une autorisation d'accès à des produits logiciels,
- dans lequel le produit logiciel est une offre on-line, qui peut être appelée par l'intermédiaire d'un réseau de données central,
- dans lequel au moins deux codes d'identification d'accès sont mémorisés par un fournisseur de produits logiciels, dans un moyen de mémorisation échangeable,
- dans lequel au moins un premier code d'identification est un code d'identification de produit, associé au produit logiciel de manière univoque,
- dans lequel les codes d'identification d'accès sont mémorisés dans une banque de données, en étant associés les uns aux autres,
- dans lequel le deuxième code d'identification peut être modifié par un fournisseur, de sorte
- que, lors d'une vente du produit logiciel, un nouveau deuxième code d'identification soit attribué,
- que le nouveau deuxième code d'identification soit mémorisé, en commun avec le code d'identification du produit, sur un moyen de mémorisation échangeable,
- que le nouveau deuxième code d'identification soit associé au code d'identification du produit dans la banque de données centrale,
- dans lequel, au moins les deux codes d'identification d'accès soient lus dans le moyen de mémorisation échangeable, lors d'un accès au produit logiciel,
- dans lequel, au moyen des deux codes d'identification d'accès, lus dans le moyen de mémorisation échangeable, une autorisation d'accès soit vérifiée de sorte que les codes d'identification d'accès interrogés soient transmis, par l'intermédiaire du réseau de données central, à un ordinateur ou à un système d'ordinateurs, qui exploitent l'offre on-line,
- que, dans l'ordinateur ou le système d'ordinateurs, l'association des codes d'identification d'accès les uns aux autres soit vérifiée et qu'un droit d'accès ait lieu lors d'un résultat positif de la vérification,
- qu'après réussite de l'accès à l'offre on-line à l'aide de l'ordinateur, le premier code d'identification d'accès, au moins, est modifié, et
- que l'association au moins du premier code d'identification au deuxième est modifiée de manière appropriée dans la banque de données centrale.

2. Procédé selon la revendication 1, **caractérisé en ce que** les deux codes d'identification d'accès au moins prévus sont mémorisés dans une mémoire USB ou dans une Smart Card.

3. Procédé selon la revendication 1, **caractérisé en ce qu'**au moins un deuxième code d'identification d'accès est un code d'identification de matériel, qui est associé de manière univoque au moyen de mémorisation.

4. Procédé selon la revendication 3, **caractérisé en ce que** l'appel des codes d'identification d'accès du moyen de mémorisation est protégé par mot de passe.
